Europäisches Patentamt

European Patent Office

Office européen des brevets

(11) Publication number: **0 138 024**
**A1**

## (12) EUROPEAN PATENT APPLICATION

(21) Application number: **84110521.6**

(22) Date of filing: **04.09.84**

(51) Int. Cl.⁴: **H 04 N 1/38**

(30) Priority: **05.09.83 JP 162908/83**

(43) Date of publication of application: **24.04.85**
**Bulletin 85/17**

(84) Designated Contracting States: **DE FR NL**

(71) Applicant: **FUJI PHOTO FILM CO., LTD., 210 Nakanuma**
**Minamiashigara-shi, Kanagawa-ken, 250-01 (JP)**

(72) Inventor: **Aagano, Toshitaka c/o Fuji Photo Film Co.,**
**Ltd., 798 Miyanodai Kaisei-machi, Ashigarakami-gun**
**Kanagawa-ken (JP)**

(74) Representative: **Kador . Klunker . Schmitt-Nilson .**
**Hirsch, Corneliusstrasse 15, D-8000 München 5 (DE)**

(54) **Image scanning read-out apparatus.**

(57) An image scanning read-out apparatus comprises a system for scanning an image original by light, a photoelectric converter for detecting an image carried in the image original and obtaining an analog image signal, and an A/D conversion system for digitally converting the analog image signal. The A/D conversion system is provided with a function of normalizing the analog image signal by use of a standard image signal detected in advance by scanning of a standard original of uniform density and then digitally converting the normalized analog image signal.

- 1 -

## BACKGROUND OF THE INVENTION

### Field of the Invention

This invention relates to an image scanning read-out apparatus for scanning an image original by light for read-out, photoelectrically detecting an image carried in the image original, and converting an electric image signal thus obtained into a digital image signal for use in reproduction of the image through an image processing.

### Description of the Prior Art

In image scanning read-out apparatuses, an image original is scanned by light for read-out in a main scanning direction and in a sub-scanning direction, for example, by causing read-out light emitted by a light source such as a laser beam oscillator to scan on the image original by use of a mechanical scanning means such as a galvanometer mirror, or by linearly positioning light sources along the main scanning direction and sequentially turning them on and off, or by using a two-dimensional light emitting panel such as a two-dimensional light emitting diode panel. The read-out light reflected by the image original or transmitted therethrough, or light emitted by the image original when the image original is exposed to the read-out light is detected by light receiving elements and photoelectrically converted. In this manner, the image carried in the image original is detected as a time-series image signal. The image signal thus obtained is subjected to a desired image processing and used for image reproduction.

- 2 -

However, in the image scanning read-out apparatuses, inherent scanning irregularity of the scanning means arises unavoidably in the main scanning direction. For example, when a mechanical scanning means such as a galvanometer mirror is used, it is difficult to achieve scanning at a completely constant velocity over the entire distance in the main scanning direction due to the inherent mechanism, such as the nonlinearity of the velocity sensor, of the scanning means. Thus, there arises inevitably an irregurality in the scanning velocity of the same pattern. Also when other scanning means are used, it is not always possible to expose the image original uniformly to the light for read-out over the entire scanning line. Therefore, an undesired density distribution deviated from a density distribution corresponding to the image stored in the image original (hereinafter referred as "density irregularity") arises in the main direction of the reproduced image and as a result, the density irregularity arises continuously in the sub-scanning direction of the reproduced image.

Density irregularity in the reproduced image is also caused by the light receiving elements, i.e. a light receiving optical system and a photoelectric converting means. As a result, quality of the reproduced image is deteriorated.

A deviation of the read-out image signal from the image signal corresponding to the image stored in the image original due to the incompleteness of the image read-out apparatus as described above is hereinafter referred as "read-out irregularity".

Density irregularity arising in a reproduced image presents a very serious problem particularly in a radiation image recording and reproducing system as disclosed, for example, in U.S. Patent Nos. 4,258,264 and 4,346,295, and Japanese Unexamined Patent Publication No. 56(1981)-11395. In the radiation image recording and reproducing system, a stimulable phosphor sheet carrying a radiation image stored therein is exposed to light for read-out, and light emitted by the stimulable phosphor sheet in proportion to the stored radiation energy when it is exposed to the light for read-out is detected and converted into an electric image signal. A visible image is then reproduced by use of the electric image signal obtained. However, particularly when the reproduced visible image is used for medical diagnosis, density irregurality arising in the reproduced visible image makes the diagnosis erroneous.

SUMMARY OF THE INVENTION

The primary object of the present invention is to provide an image scanning read-out apparatus which eliminates read-out nonuniformity and makes it possible to obtain a sharp reproduced image free from density nonuniformity.

Another object of the present invention is to provide an image scanning read-out apparatus which makes it possible to obtain a reproduced image free from density irregularity even when scanning in the main scanning direction is conducted at a high speed.

The image scanning read-out apparatus in accordance with the present invention comprises:

0138024

— 4 —

i) a scanning means for scanning an image origianl by light for read-out in the main scanning direction and in the sub-scanning direction,

ii) a photoelectric conversion means for photoelectrically detecting an image carried in said image original as said image original is scanned by said light for read-out and obtaining a time-series analog image signal, and iii) an A/D conversion means for digitally converting said analog image signal,

iv) said A/D conversion means being provided with a function of normalizing said analog image signal by use of a standard image signal detected in advance by scanning a standard original of uniform density in the main scanning direction, and then digitally converting the normalized analog image signal.

In the apparatus of the present invention, since read-out irregularity caused by the structure of the apparatus such as the scanning velocity irregularity and the errors in the performance of light receiving elements is eliminated, it becomes possible to reproduce a sharp visible image free from density irregularity. Also, since normalization of the image signal is conducted on the analog signal and then the normalized analog signal is digitally converted, the processing speed becomes very higher than that in the case where normalization is conducted on a digital signal. Therefore, even when a high scanning velocity in the main scanning direction is required, it is possible to normalize the image signal on a real time basis and to reproduce a visible image free from density irregularity.

As the standard original, any original having a pattern of uniform density may be used. The term "uniform density" as used herein means not only uniform optical density but also a uniform level of radiation energy stored in a stimulable phosphor sheet when the stimulable phosphor sheet is used as the standard original. Namely, "standard original of uniform density" means such an image original that, when the image original is uniformly exposed to light for read-out, the amount of light reflected by each portion of the image original, or the amount of light transmitted therethrough, or the amount of light emitted thereby is uniform. Further, the term "standard image signal" as used herein means an image signal obtained by scanning a "standard original of uniform density" in the main scanning direction.

The width of the standard origianl in the main scanning direction must be equal to or larger than the length of the main scanning line of the image scanning read-out apparatus.

When a galvanometer mirror or the like is used as the means for scanning forwardly and backwardly in the main scanning direction and an image signal is detected only by forward scanning or backward scanning in the main scanning direction for use as the read-out signal, it is sufficient that image read-out for obtaining the standard image signal be carried out only for forward scanning or backward scanning respectively. When an image signal detected by forward and backward scanning in the main scanning direction is used as the read-out signal, it is necessary that image read-out for obtaining the standard image signal be carried out for both forward scanning and backward scanning. In the case where a polygon scanner or a hologram scanner is used as the means for scanning in the main scanning direction, it is necessary for obtaining the standard image signal to carry out scanning in a number of times equal to the number of faces of the mirror of the polygon or that of the hologram.

The standard image signal is obtained by scanning the standard original of uniform density as an analog signal involving intensity irregularity corresponding to density irregularity in a reproduced image.

The standard image signal thus obtained is digitally converted and stored in a memory means. When an analog image signal obtained by reading out an image original carrying an image to be reproduced is inputted to the A/D conversion means, the standard image signal stored is analogously converted and inputted to the A/D conversion means as a reference signal. Thus the normalized analog image signal is obtained by dividing said analog image signal by the standard image signal on a real time basis.

As the A/D conversion means, it is possible to use, for example, an A/D converter. As the memory means for the standard image signal, it is possible to use, for example, a random access memory (RAM). As the analogous conversion means, a D/A converter or the like may be used.

## BRIEF DESCRIPTION OF THE DRAWINGS

Figure 1 is a schematic view showing an embodiment of the image scanning read-out apparatus in accordance with the present invention,

Figure 2 is a graph showing an analog standard image signal which is outputted by the photomultiplier of the apparatus of Figure 1, and

Figure 3 is a schematic view showing the conventional radiation image read-out apparatus.

## DESCRIPTION OF THE PREFERRED EMBODIMENTS

The present invention will hereinbelow be described in further detail with reference to the accompanying drawings.

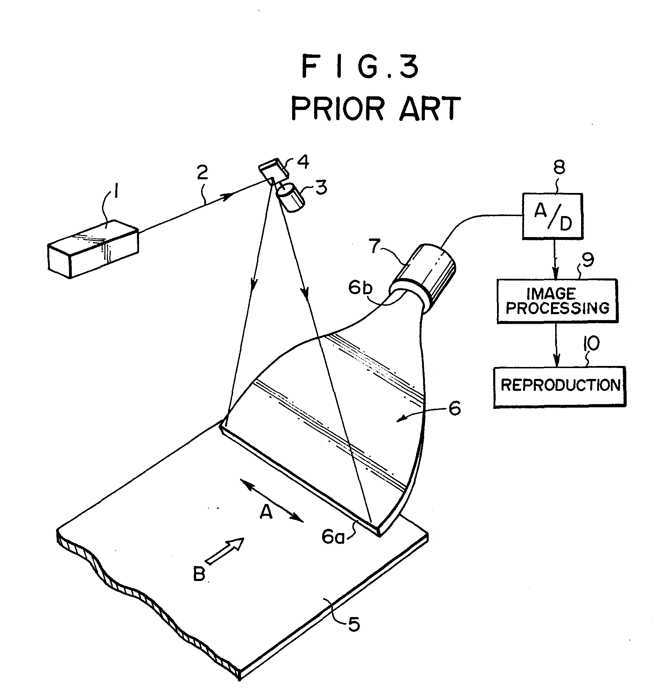

Referring to Figure 3 showing the conventional radiation image read-out apparatus, a laser beam 2 emitted by a laser beam source 1 is made by a mirror 4 to impinge upon a stimulable phosphor sheet 5 and to scan thereon in the main scanning direction as indicated by the arrow A. The mirror 4 is supported on the rotation shaft of a galvanometer 3 and maintained at a neutral position when the galvanometer 3 is not driven. When the galvanometer 3 is driven, the mirror 4 is rotated in both ways with respect to the neutral position in accordance with a current for driving the galvanometer 3, and the laser beam 2 is swept to both sides of the neutral position. For example, when a negative voltage is applied to the galvanometer 3, the laser beam 2 is swept to one side of the neutral position. When a positive voltage is applied thereto, the laser beam 2 is swept to the other side of the neutral position. However, in the case where a mechanical scanning means such as the galvanometer 3 is used, it is difficult to keep the scanning velocity constant over an entire scanning line even when the voltage applied to the galvanometer 3 is linearly changed from a predetermined negative value to a predetermined positive value. Particularly in the vicinity of the ends of the scanning line, it is very difficult to maintain the scanning velocity constant. While the laser beam 2 impinges upon the stimulable phosphor sheet 5 in the main scanning direction, the sheet 5 is moved in the sub-scanning direction as indicated by the arrow B. As a result, the whole surface of the stimulable phosphor sheet 5 is two-dimensionally scanned by the laser beam 2. As the stimulable phosphor sheet 5 is exposed to the laser beam 2, light is emitted by the sheet 5 in proportion to the radiation energy stored. The emitted light is received by a light receiving member 6 made of a transparent sheet, and is transmitted inside thereof through total reflections to a photomultiplier 7. The light is thus detected and converted into an analog electric signal by the photomultiplier 7. The light receiving member 6 has a light input face 6a positioned close to the scanning line and a light output face 6b closely contacted with the photomultiplier 7. In order to make uniform the incident efficiency and the transmitting efficiency of the light emitted by each position of the stimulable phosphor sheet 5 along the scanning line, the light input face 6a of the light receiving member 6 is formed in

0138024

- 9 -

a flat shape uniform in the scanning direction. The light output face 6b of the light receiving member 6 is formed in a ring shape to match the shape of a circular light receiving face of the photomultiplier 7. The shape of the light receiving member 6 and the method of making it are described in detail in U.S. Patent No. 4,346,295.

The analog electric signal thus obtained is converted by an A/D converter 8 into a digital signal, which is then processed by an image processor 9 and is sent to an image reproducing means 10 for reproducing a visible image.

However, in the conventional radiation image read-out apparatus, the image signal detected as described above involves read-out irregularity in the main scanning direction, which is caused by scanning by the laser beam 2 in the main scanning direction. Further, since it is impossible to form the light input face 6a of the light receiving member 6 in a completely uniform flat shape and the light input face 6a is distorted to some extent, nonuniformity of the incident efficiency of the light emitted by each portion of the stimulable phosphor sheet 5 in the main scanning direction into the light receiving member and irregularity of the transmission efficiency inside of the light receiving member 6 arise and generate read-out irregularity in the image signal. Read-out irregularity is also generated since the sensitivity of the photomultiplier 7 is not uniform over the entire receiving face thereof. Therefore, a visible radiation image reproduced by use of the image signal includes density irregularity. Particularly when the radiation image is used for medical diagnosis, density irregularity makes diagnosis erroneous.

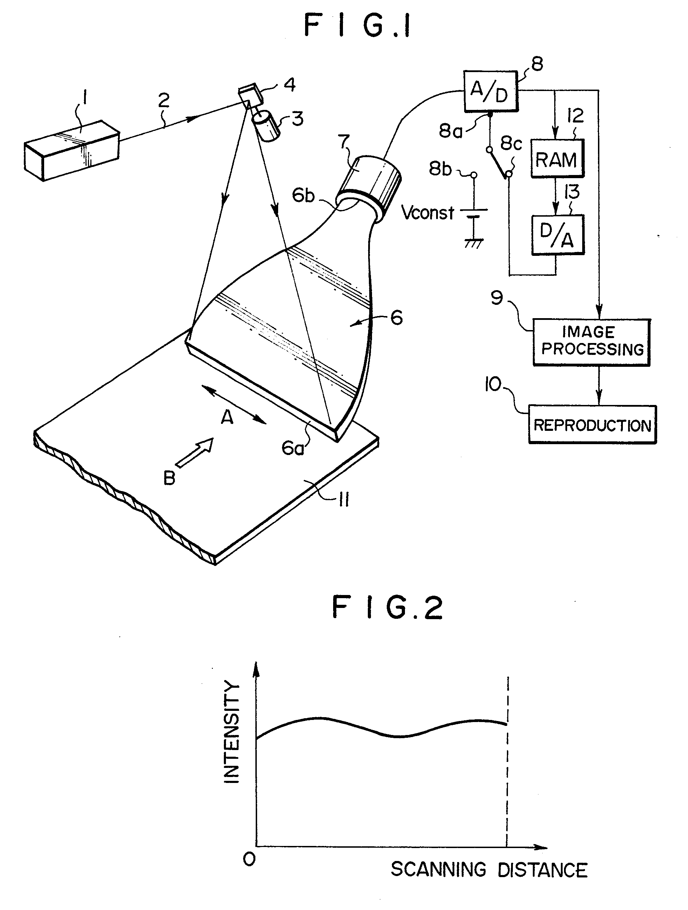

Figure 1 shows an embodiment of the image scanning read-out apparatus in accordance with the present invention, which eliminates read-out irregularity arising during read-out. In Figure 1, similar elements are numbered with the same reference numerals with respect to Figure 3.

In Figure 1, a standard original 11 comprising a stimulable phosphor sheet uniformly exposed to X-rays is first fed to the image scanning read-out apparatus, and desired portion of the standard original 11 is scanned by the laser beam 2. Light emitted by the standard original 11 in proportion to the radiation energy stored when it is exposed to the laser beam 2 is received by the light receiving member 6 and transmitted therethrough repeating total reflections to the photomultiplier 7. The light is detected and converted by the photomultiplier 7 into an analog image signal, which is then inputted to the A/D converter 8. Since inherent read-out irregularity is caused by the structure of the apparatus, the analog image signal has the wave form (shading) of an intensity distribution as shown in Figure 2. The analog image signal is digitally converted by the A/D converter 8 and stored in a RAM 12. At this time, a reference voltage input terminal 8a is connected to a terminal 8b, and a predetermined voltage is applied as the reference voltage of the A/D converter 8.

Thereafter, though not shown in Figure 1, a stimulable phosphor sheet 5 carrying a radiation image of an object stored therein is fed to the image scanning read-out apparatus, and the radiation image is read out by scanning by the laser beam 2 in the same manner as in Figure 3. Light emitted by the stimulable phosphor sheet 5 in proportion to the stored radiation energy when it is exposed to the laser beam 2 is received by the photomultiplier 7 via the light receiving member 6, converted into an analog image signal, and inputted to the A/D converter 8 in the same manner as when the standard original 11 is read out. The wave form of the analog image signal is such that the image signal correctly representing the radiation image stored in the stimulable phosphor sheet 5 is superposed on the wave form of the standard image signal as shown in Figure 2.

Simultaneously with the input of the analog image signal to the A/D converter 8, a digital image signal is outputted by the A/D converter 8 to a reading terminal of the RAM 12. Upon receiving the digital image signal, the RAM 12 sends the standard image signal stored therein to a D/A converter 13. Thus the standard image signal digitally converted and stored in the RAM 12 is converted by the D/A converter 13 back to an analog signal. At this time, the reference voltage input terminal 8a is connected to a terminal 8c, and the analogously converted standard image signal is applied as the reference voltage to the A/D converter 8. In this manner, the A/D conversion of the analog image signal obtained by reading out the radiation image stored in the stimulable phosphor sheet 5 is synchronized with the analog standard image signal inputted to the A/D converter 8, and calculation of Vd/Vref wherein Vd denotes the analog image signal voltage and Vref denotes the analog standard image signal voltage is carried out by the A/D converter 8. By this calculation, the analog image signal becomes an image signal free from the read-out irregularity, and a normalization processing is completed.

The normalized analog image signal is digitally converted by the A/D converter 8. It is then processed by the image processing section 9 when necessary, and is sent to the image reproducing section 10 for use in reproduction of a visible radiation image. The visible radiation image thus reproduced is sharp and free from density irregularity caused by scanning irregularity. In this manner, it is possible to obtain a visible image having an improved image quality, particularly a high diagnostic efficiency and accuracy. The normalization processing is conducted on a real time basis each time the analog image signal for reproduction is inputted to the A/D converter 8.

In should be understood that the present invention can be embodied in various types other than the above described embodiment.

For example, it is also possible to position a logarithmic converter at the front stage of the A/D converter 8 and to carry out the normalization processing

0138024

!b —

after the two image signals are converted logarithmically. In this case, calculation for the normalization processing can be achieved only by subtracting the analog standard image signal from the analog image signal. When a logarithmic amplifier is used as the logarithmic converter, the logarithmic amplifier should preferably be such that it provides a sufficient wide band width.

Further, the present invention is not limited to the radiation image scanning read-out apparatus as described above but is applicable to various types of image scanning read-out apparatuses.

In the embodiment as described above, scanning by the light for read-out in the main scanning direction is conducted by use of the galvanometer mirror. However, the present invention is not limited to this main scanning method. For example, it is also possible to position many light sources linearly along the main scanning line and to sequentially turn them on and off, thereby sequentially exposing the image original to light for read-out. In this case, the read-out light reflected by the image original or transmitted therethrough, or light emitted by the image original when the image original is exposed to the read-out light is received by light receiving elements positioned linearly along the main scanning line, and is photoelectrically converted to obtain a time-series image signal. It is also possible to conduct read-out electrically by using a two-dimensional light emitting panel such as a two-dimensional light emitting diode panel.

## C L A I M S

1.  An image scanning read-out apparatus comprising:

i)      a scanning means for scanning an image original by light for read-out in the main scanning direction and in the sub-scanning direction,

ii)      a photoelectric conversion means for photoelectrically detecting an image carried in said image original as said image original is scanned by said light for read-out and obtaining a time-series analog image signal, and iii)      an A/D conversion means for digitally converting said analog image signal,

iv)      said A/D conversion means being provided with a function of normalizing said analog image signal by use of a standard image signal detected in advance by scanning of a standard original of uniform density in the main scanning direction, and then digitally converting the normalized analog image signal.

2.  An apparatus as defined in Claim 1 wherein said A/D conversion means comprises:

a)      an A/D converter for digitally converting said standard image signal,

b)      a memory means for storing said standard image signal digitally converted by said A/D converter,

c)      a D/A converter for analogously converting said standard image signal stored in said memory means in synchronization with input of said analog image signal to said A/D converter, and

0138024

— Å —

d)      an input means for sending an output of said D/A
converter as a reference signal to said A/D converter,

e)      said A/D converter being provided with the function
of normalizing said analog image signal.

    3.  An apparatus as defined in Claim 1 further
comprising a logarithmic conversion means for conducting
logarithmic conversion of said standard image signal and said
analog image signal before the signals are inputted to said
A/D converter.

    4.  An apparatus as defined in Claim 2 further
comprising a logarithmic conversion means for conducting
logarithmic conversion of said standard image signal and said
analog image signal before the signals are inputted to said
A/D converter.

    5.  An apparatus as defined in Claim 2 or 4 wherein
said memory means is a random access memory.

    6.  An apparatus as defined in Claim 1 wherein said
image original is a stimulable phosphor sheet carrying
a radiation image stored therein.

    7.  An apparatus as defined in any of Claims 2 to 5
wherein said image original is a stimulable phosphor sheet
carrying a radiation image stored therein.

# FIG.1

# FIG.2

# F I G.3
## PRIOR ART

0138024

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR - A1 - 2 487 613 (MATRA) | 1,2,5 | H 04 N 1/38 |
| Y | * Page 10, line 1 - page 11, line 33; fig.9,10 * | 6,7 | |
| | -- | | |
| X | DE - A - 2 353 299 (IBM) | 1,2 | |
| Y | * Fig. 1; page 2, line 29 - page 3, line 11; page 3, line 21 - page 8, line 16 * | 6,7 | |
| | -- | | |
| X | DE - A - 2 354 520 (IBM) | 1,2 | |
| | * Fig. 1,4,5; page 5, line 26 - page 9, line 17; | | |
| | -- | | |
| Y | FR - A1 - 2 522 454 (FUJI) | 6,7 | TECHNICAL FIELDS SEARCHED (Int. Cl.4) |
| | * Fig. 1,3; page 2, line 3 - page 3, line 3 * | | |
| | -- | | |
| A | US - A - 4 370 678 (KITAMURA) | | H 04 N |
| | * Fig. 3,7 * | | |
| | ---- | | |

The present search report has been drawn up for all claims

| Place of search | Date of completion of the search | Examiner |
|---|---|---|
| VIENNA | 29-11-1984 | DIMITROW |